# EUROPEAN PATENT SPECIFICATION

(11) **EP 1 933 554 B1**
(45) Date of publication and mention of the grant of the patent: **04.05.2011**
(21) Application number: 07117843.8
(22) Date of filing: 03.10.2007
(51) Int. Cl.: H04N 5/50, H04N 5/44, H04N 5/445

(54) **Broadcast receiving apparatus and method**
Rundfunkempfangsvorrichtung und -verfahren
Appareil et procédé de réception de diffusion

(30) Priority: 14.12.2006 KR 20060127740
(43) Date of publication of application: 18.06.2008
(73) Proprietor: Samsung Electronics Co., Ltd., Gyeonggi-do 442-742 (KR)
(72) Inventor: Kwon, Yong-hwan, Gyeonggi-do (KR); Seong, Ki-ae, Seoul (KR); Lee, Hye-won, Seoul (KR); Jun, Hye-sang, Seoul (KR); Lee, Keum-koo, Gyeonggi-do (KR); Kim, Hye-rin, Seoul (KR); Seo, Joon-kyu, Seoul (KR); Her, Jee-young, Seoul (KR)
(74) Representative: Walaski, Jan Filip

(56) References cited:
- EP-A- 1 326 434
- EP-A2- 1 143 717
- US-A1- 2002 194 600
- US-A1- 2003 013 424
- US-A1- 2004 177 372
- US-B1- 6 956 623

## Description

The present invention relates to receiving a broadcast, and more particularly, to receiving a broadcast so that broadcast channels may be tuned and a list of tunable broadcast channels may be displayed on a screen.

Broadcast receiving apparatuses, such as televisions (TVs) or set-top boxes, provide a list of tunable broadcast channels to a user, and allow the user to view the list and select a desired broadcast channel.

However, the development of cable broadcasting, satellite broadcasting, digital broadcasting, or other types of broadcasting has led to an enormous increase in the number of broadcast channels capable of being tuned by broadcast receiving apparatus, and thus, broadcast channel lists have become longer.

A user may become annoyed when he or she tries to find preferred broadcast channels in the long broadcast channel list. Additionally, in order to obtain information regarding what programs are currently being broadcast on the preferred channels, the user needs to select each of the preferred broadcast channels separately, which causes inconvenience to the user.

Therefore, there is a need for methods that allow a user to easily search for desired broadcast channels in the broadcast channel list, and to confirm what programs are currently being broadcast on the preferred channels without selecting each of the preferred broadcast channels separately using a remote controller.

Exemplary embodiments of the present invention overcome the above disadvantages and other disadvantages not described above. Also, the present invention is not required to overcome the disadvantages described above, and an exemplary embodiment of the present invention may not overcome any of the problems described above.

US 2002/194600 discloses an electronic television program guide schedule system and method. EP 1326434 discloses a digital television apparatus provided with a quick tuning function.

The present invention provides a broadcast receiving apparatus according to claim 1, and a broadcast receiving method according to claim 12, in which specific broadcast channels are distinguished, displayed and automatically tuned.

According to an aspect of the present invention, there is provided a broadcast receiving apparatus comprising a broadcast receiver which tunes to a broadcast channel; a display information generator which generates display information to be displayed on one field of a display; and a controller which controls the display information generator to generate a list, in which specific broadcast channels are displayed differently from other broadcast channels among tunable broadcast channels and shown as display information, and controls the broadcast receiver to automatically tune to specific broadcast channels from among the tunable broadcast channels.

The controller may scan the tunable broadcast channels sequentially in one of an increasing order and a decreasing order, and may control the broadcast receiver to tune to a currently scanned broadcast channel if it is determined that the currently scanned broadcast channel is one of the specific broadcast channels.

The controller may control the display information generator to generate an identification number of the currently scanned broadcast channels as display information, and may control the broadcast receiver to tune to the currently scanned broadcast channel while displaying the identification number of the currently scanned broadcast channel if it is determined that the currently scanned broadcast channel is one of the specific broadcast channels.

The controller may control the display information generator to generate the identification number of the currently scanned broadcast channel for a first time period, if it is determined that the currently scanned broadcast channel is one of the specific broadcast channels, and may control the display information generator to generate the identification number of the currently scanned broadcast channel for a second time period shorter than the first time period, if it is determined that the currently scanned broadcast channel is not one of the specific broadcast channels.

Additionally, the controller may control the display information generator so that the operations of displaying the identification number of the currently scanned broadcast channel may be different according to whether the currently scanned broadcast channel is or is not one of the specific broadcast channels.

The controller may control the broadcast receiver not to tune to the currently scanned broadcast channel if it is determined that the currently scanned broadcast channel is not one of the specific broadcast channels.

Furthermore, the controller may control the broadcast receiver not to tune to any broadcast channel, or may control broadcasting on a broadcast channel tuned by the broadcast receiver not to be displayed on the display, if it is determined that the currently scanned broadcast channel is not one of the specific broadcast channels. The specific broadcast channels may comprise one of broadcast channels selected by users, broadcast channels frequently viewed by users, digital broadcast channels, and major broadcast channels.

The broadcast receiving apparatus may further comprise a display which displays the list generated by the display information generator and broadcasting provided on the broadcast channel tuned by the broadcast receiver.

According to another aspect of the prevent invention, there is provided a broadcast receiving method comprising generating a list, in which specific broadcast channels are distinguished from other broadcast channels among tunable broadcast channels and shown as display information to be displayed on one field of a display; and tuning to the specific broadcast channels automatically from among the tunable broadcast channels.

The automatically tuning may comprise scanning the tunable broadcast channels sequentially in one of an increasing order and a decreasing order; and tuning to a currently scanned broadcast channel if it is determined that the currently scanned broadcast channel is one of the specific broadcast channels.

The tuning the currently scanned broadcast channel may comprise generating the identification number of the currently scanned broadcast channel as display information; and tuning to the currently scanned broadcast channel while displaying the identification number of the currently scanned broadcast channel if it is determined that the currently scanned broadcast channel is one of the specific broadcast channels.

The tuning the currently scanned broadcast channel may comprise generating the identification number of the currently scanned broadcast channel for a first time period, if it is determined that the currently scanned broadcast channel is one of the specific broadcast channels; and generating the identification number of the currently scanned broadcast channel for a second time period shorter than the first time period, if it is determined that the currently scanned broadcast channel is not one of the specific broadcast channels.

Additionally, the operations of displaying the identification number of the currently scanned broadcast channel may be different according to whether the currently scanned broadcast channel is or is not one of the specific broadcast channels. The automatically tuning may comprise not tuning to the currently scanned broadcast channel, if it is determined that the currently scanned broadcast channel is not one of the specific broadcast channels.

Furthermore, the automatically tuning may comprise not tuning to any broadcast channel, or controlling broadcasting on a tuned broadcast channel not to be displayed, if it is determined that the currently scanned broadcast channel is not one of the specific broadcast channels.

The specific broadcast channels may comprise one of broadcast channels selected by users, broadcast channels frequently viewed by users, digital broadcast channels, and major broadcast channels.

The broadcast receiving method may further comprise displaying the list and broadcasting provided on the tuned broadcast channel.

Embodiments of the invention will now be described, by way of example, with reference to the accompanying drawings, in which:
Figure 1 is a block diagram of a broadcast receiving apparatus for distinguishing, displaying and tuning automatically to specific broadcast channels, according to an exemplary embodiment of the present invention;
Figure 2 is a flowchart illustrating a broadcast receiving method for distinguishing, displaying and automatically tuning to preferred broadcast channels, according to another exemplary embodiment of the present invention;
Figures 3A to 3C illustrate screen displays as part of the broadcast receiving method of Figure 2;
Figure 4 is a block diagram of a broadcast receiving apparatus for distinguishing, displaying and automatically tuning to specific broadcast channels, according to a further exemplary embodiment of the present invention; and
Figure 5 is a flowchart illustrating a broadcast receiving method for distinguishing, displaying and automatically tuning to specific broadcast channels, according to still another exemplary embodiment of the present invention.

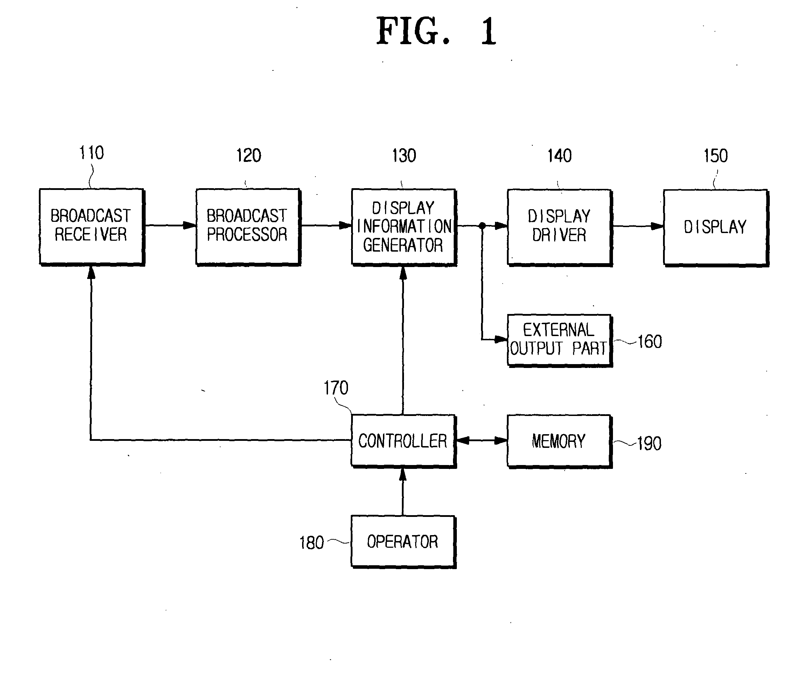

Figure 1 is a block diagram of a broadcast receiving apparatus according to an exemplary embodiment of the present invention. The broadcast receiving apparatus according to an exemplary embodiment of the present invention displays a list of tunable broadcast channels and provides the list to a user. When displaying the broadcast channel list, the broadcast receiving apparatus according to an exemplary embodiment of the present invention distinguishes specific or predetermined broadcast channels from other broadcast channels. In one embodiment this is done by displaying the specific broadcast channels differently from the other broadcast channels.

Additionally, the broadcast receiving apparatus according to an exemplary embodiment of the present invention automatically tunes to the specific broadcast channels and provides the channels to a user.

As shown in Figure 1, the broadcast receiving apparatus according to an exemplary embodiment of the present invention comprises a broadcast receiver 110, a broadcast processor 120, a display information generator 130, a display driver 140, a display 150, an external output part 160, a controller 170, an operator 180, and a memory 190.

The broadcast receiver 110 tunes to one of the broadcast channels. The broadcast processor 120 performs broadcast signal processing, such as decoding, scaling, or the like, for a broadcast signal output through the broadcast channel tuned by the broadcast receiver 110.

The display information generator 130 generates display information to be displayed on one field of the display 150. The display information generator 130 may add the display information into the form of a broadcast output from the broadcast processor 120 according to an on-screen display (OSD) method.

The display information generated by the display information generator 130 may comprise information relating to a broadcast channel list, one or more broadcast channel identification numbers, or other information.

The display driver 140 displays the broadcast with the display information output from the display information generator 130 on the display 150. The external output part 160 outputs the broadcast with the display information output from the display information generator 130 to an external display (for example, an external TV).

The controller 170 controls the entire operation of the broadcast receiving apparatus according to the user's operation commands input through the operator 180. The operator 180 may be implemented with operation buttons included on the broadcast receiving apparatus, a remote controller for remotely inputting the user's operation commands, and a remote control signal receiving element for transmitting the user's operation commands received by the remote controller to the controller 170.

The memory 190 is a storage element containing programs and information required for controlling operation of the broadcast receiving apparatus by the controller 170. The information stored in the memory 190 may comprise information on tunable broadcast channels, and information on specific broadcast channels.

In particular, the controller 170 controls the display information generator 130 so that the broadcast channel list, in which specific broadcast channels are distinguished from other broadcast channels among the tunable broadcast channels and shown, may be displayed on the display 150.

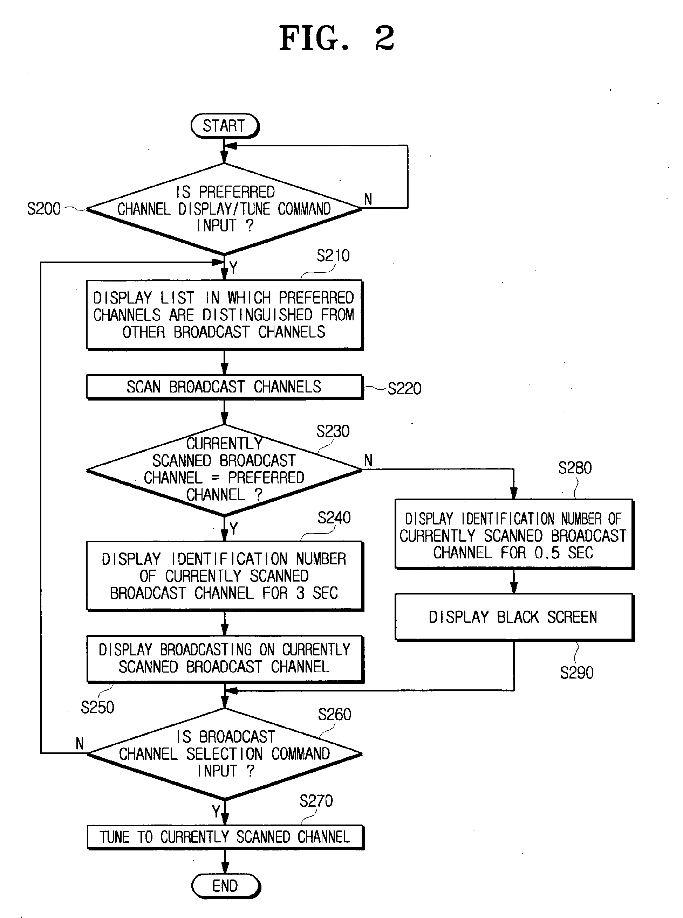

Additionally, the controller 170 controls the broadcast receiver 110 to automatically tune to the specific broadcast channels sequentially, so that broadcasts provided on the specific broadcast channels may be sequentially displayed on the display 150. Hereinafter, under the assumption that the specific broadcast channels are channels which are preferred by a user, an operation in which the broadcast receiving apparatus according to an exemplary embodiment of the present invention provides a broadcast channel list in which the preferred channels are distinguished and shown, and the preferred channels are automatically tuned, will be described in detail with reference to Figure 2. Figure 2 is a flowchart explaining a broadcast receiving method for distinguishing, displaying and automatically tuning to preferred channels.

Referring to Figure 2, if a user inputs a preferred channel display/tune command through the operator 180 (S200-Y), the controller 170 may control the display information generator 130 such that a broadcast channel list in which the preferred channels are distinguished from other broadcast channels and shown may be displayed on the display 150 (S210).

In operation S200, the user may input the preferred channel display/tune command by depressing a broadcast channel-UP button or a broadcast channel-DOWN button, included on the operator 180.

In order to perform operation S210, the controller 170 may read information stored in the memory 190 to find the tunable broadcast channels and preferred channels. Additionally, the controller 170 may control the display information generator 130 to generate a broadcast channel list in which the preferred channels from among the tunable broadcast channels are distinguished from other broadcast channels, and the broadcast channel list is displayed on one field of the display 150.

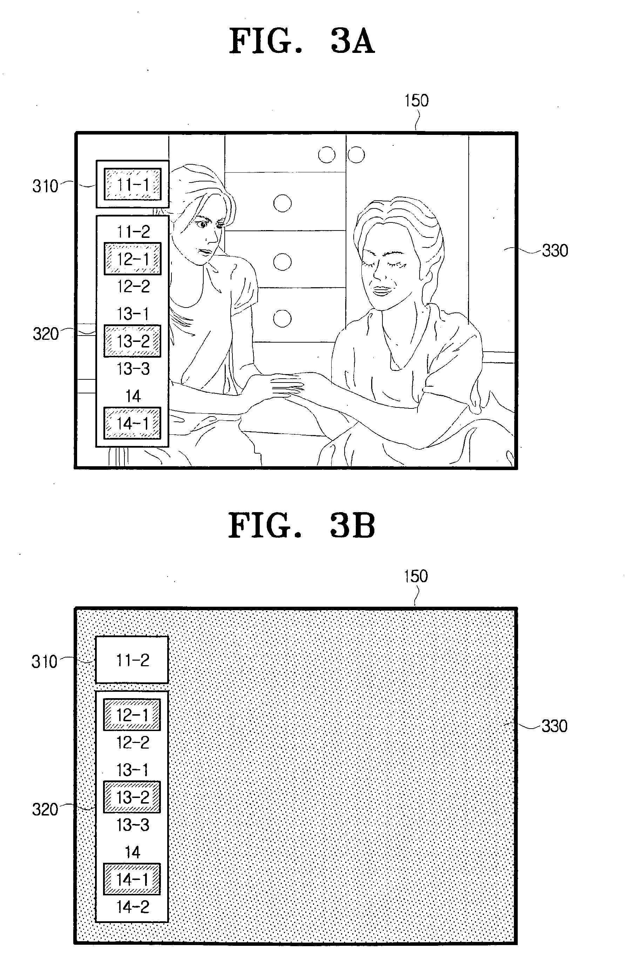

Figures 3A to 3C are exemplary views of the broadcast channel list displayed on the display 150 in operation S210. In a broadcast channel list 320 illustrated in Figures 3A to 3C, the preferred channels, with identification numbers "12-1", "13-2", "14-1", and "15", are distinguished from other broadcast channels, with identification numbers "11-2", "12-2", "13-1", "13-3", "14", and "14-2", by a mark in the form of a bar or shaded block in which the numbers are presented.

Referring to Figure 2, after operation S210 the controller 170 may scan the broadcast channels (S220). The broadcast channel scanning is an operation for selecting each of the tunable broadcast channels in sequence.

The broadcast channel scanning may start with a broadcast channel subsequent to the currently tuned broadcast channel along the scan direction, in either increasing order or decreasing order. Specifically, if the preferred channel display/tune command is input using the broadcast channel-UP button in operation S200, the controller 170 may scan broadcast channels in increasing order, and if the preferred channel display/tune command is input using the broadcast channel-DOWN button in operation S200, the controller 170 may scan broadcast channels in decreasing order.

If it is determined that the currently scanned broadcast channel is the preferred channel (S230-Y), the controller 170 may control the display information generator 130 to display the identification number of the currently scanned broadcast channel on the display 150 for approximately 3 seconds (S240). Additionally, the controller 170 may control the broadcast receiver 110 so that the currently scanned broadcast channel may be tuned for approximately 3 seconds during which the identification number of the currently scanned broadcast channel is displayed. Accordingly, broadcasting provided on the currently scanned broadcast channel may be displayed on the display 150 (S250).

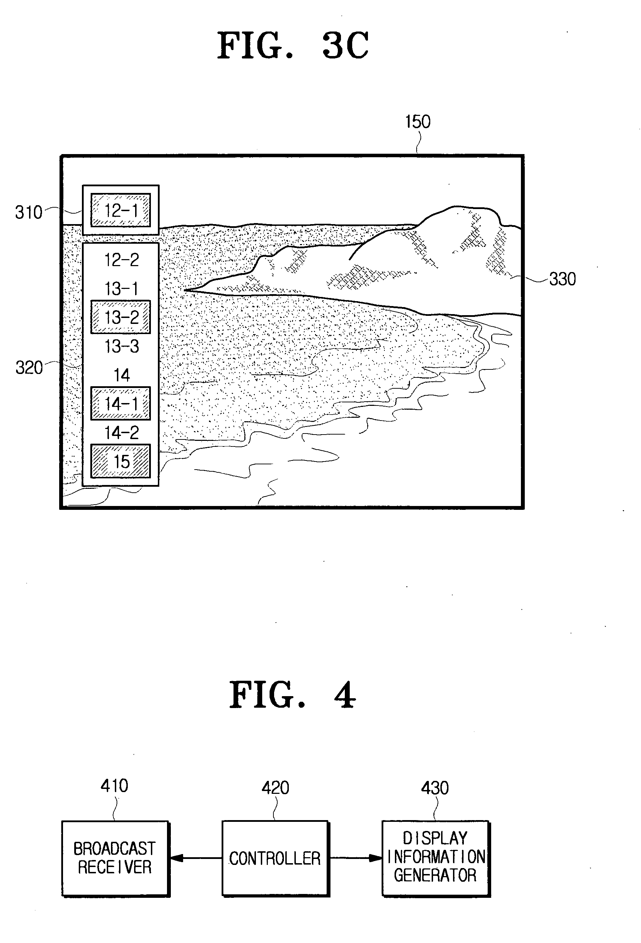

Figures 3A and 3C show screens displayed on the display 150 when the currently scanned channels with identification numbers "11-1" and "12-1" are the preferred channels. As shown in Figures 3A and 3C, the identification number 310 of the currently scanned broadcast channel appears on the left top of the display 150, and broadcasting 330 provided on the currently scanned broadcast channel is displayed on the display 150. The number 310 of the currently scanned broadcast channel and broadcasting 330 provided on the currently scanned broadcast channel may be displayed for approximately 3 seconds, although not shown in Figures 3A and 3C.

Referring again to Figure 2, after operation S250 the controller 170 determines whether a broadcast channel selection command is input during approximately 3 seconds during which the identification number of the currently scanned broadcast channel and broadcasting provided on the currently scanned broadcast channel are displayed (S260).

In operation S260, the broadcast channel selection command may be input by releasing the broadcast channel-UP button and broadcast channel-DOWN button that have been pressed by a user.

If it is determined that the broadcast channel selection command is input (S260-Y), the controller 170 may control the broadcast receiver 110 to continuously tune to the currently scanned broadcast channel (S270). Accordingly, broadcasting provided on the currently scanned broadcast channel is continuously displayed on the display 150.

On the other hand, if it is determined that the broadcast channel selection command is not input (S260-N), the process may be repeated starting from operation S210.

If it is determined that the currently scanned broadcast channel is not the preferred channel (S230-N), the controller 170 may control the display information generator 130 to display the number of the currently scanned broadcast channel on the display 150 for approximately 0.5 seconds (S280). In addition, the controller 170 may control such that the black screen appears black on the display 150 for approximately 0.5 seconds during which the identification number of the currently scanned broadcast channel is displayed (S290).

In order to perform operation S290, the controller 170 may control the broadcast receiver 110 not to tune to any broadcast channel, or control broadcasting of the broadcast channel tuned by the broadcast receiver 110 so that the broadcast is not transmitted to the display 150. Additionally, the controller 170 may control such that a black screen may be generated by the broadcast processor 120 or the display information generator 130.

Figure 3B shows a screen which is displayed on the display 150 when the currently scanned broadcast channel, identification number "11-2", is not the preferred channel. As shown in Figure 3B, the identification number 310 of the currently scanned broadcast channel appears on the upper left-hand side of the display 150, and a black screen 330 is displayed on the display 150. The identification number 310 of the currently scanned broadcast channel and the black screen 330 appear for approximately 0.5 seconds, although this is not shown in Figure 3B.

When displaying the identification number 310 of the currently scanned broadcast channel, the operations of displaying the identification numbers of the preferred channels and non-preferred broadcast channels are different. In other words, in the case of preferred channels, identification numbers "11-1" and "12-1", shown in Figures 3A and 3C, the identification number 310 of the currently scanned broadcast channel is displayed together with a mark in the form of a bar. On the other hand, in the case of non-preferred broadcast channel, identification number "11-2", shown in Figure 3B, the identification number 310 of the currently scanned broadcast channel is displayed without a mark in the form of a bar.

Referring again to Figure 2, after operation S290, the controller 170 determines whether the broadcast channel selection command is input during approximately 0.5 seconds during which the identification number of the currently scanned broadcast channel and a black screen appear (S260).

If it is determined that the broadcast channel selection command is input (S260-Y), the controller 170 may control the broadcast receiver 110 to tune to the currently scanned broadcast channel (S270). Accordingly, the black screen may disappear on the display 150, and the broadcast provided on the currently scanned broadcast channel may be displayed.

By contrast, if it is determined that the broadcast channel selection command is not input (S260-N), the process may be repeated starting from operation S210. The operation for displaying the preferred channels as specific broadcast channels which are distinguished from other broadcast channels, and automatically tuning to the preferred channels are explained above in accordance with the exemplary embodiment of the present invention.

In operation S290 of the exemplary embodiment, if the currently scanned broadcast channel is not a preferred channel, a black screen may appear. However, this is merely exemplary, and it is also possible to continuously display "broadcasting provided on the preferred channel which has been previously or finally scanned", instead of the black screen.

In other words, in operation S290 of the exemplary embodiment, if the currently scanned broadcast channel is not a preferred channel, other broadcast channels may be tuned, instead of the currently scanned broadcast channel.

Additionally, as shown in Figures 3A to 3C, the preferred channels are distinguished from other channels using a mark in the form of a bar, but other operations may be employed. For example, broadcast channels may be distinguished by marks with other forms (for example, "√") other than the form of a bar, or by different font sizes or different font colours.

Furthermore, the preferred channels of the exemplary embodiment may be broadcast channels directly selected by a user, and broadcast channels frequently viewed by a user.

In addition, as the preferred channels are one example of the specific broadcast channels, the present invention may be applied even in the case of specific broadcast channels other than the preferred channels. In other words, the present invention can also be applied to situations in which digital broadcast channels are distinguished from analogue broadcast channels among broadcast channels and the digital broadcast channels are automatically tuned, or situations in which major broadcast channels are distinguished from minor broadcast channels among digital broadcast channels and the major broadcast channels are automatically tuned.

Furthermore, in the exemplary embodiment of the present invention, "3 seconds" and "0.5 seconds" given as periods, during which the number of the currently scanned broadcast channel is displayed, are merely exemplary and offered for the sake of understanding and convenience, and it is possible to implement the present invention using other time periods.

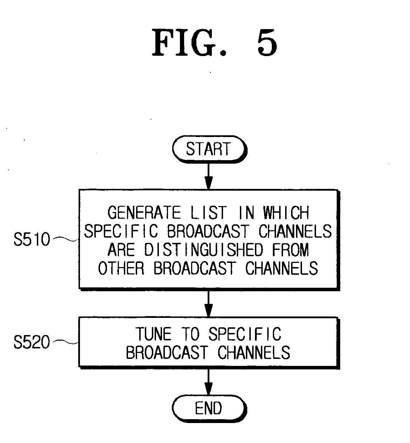

As the broadcast receiving apparatus as shown in Figure 1 is only one exemplary embodiment of the present invention, not all blocks of Figure 1 need to be included in broadcast receiving apparatuses to which the present invention is applied, and thus, unnecessary blocks may be omitted. For example, if the broadcast receiving apparatus is a set-top box, the display driver 140 and display 150 may be omitted. Hereinafter, a broadcast receiving apparatus and a broadcast receiving method according to another exemplary embodiment of the present invention will be described with reference to Figures 4 and 5.

As shown in Figure 4, the broadcast receiving apparatus according to another exemplary embodiment of the present invention comprises a broadcast receiver 410, a controller 420, and a display information generator 430. The broadcast receiver 410 tunes to broadcast channels, and the display information generator 430 generates display information to be displayed on one field of a display.

The controller 420 controls the display information generator 430 to generate a list, in which specific broadcast channels are distinguished from other broadcast channels among the tunable broadcast channels and shown as display information. Additionally, the controller 420 controls the broadcast receiver 410 so that specific broadcast channels may be automatically tuned among the tunable broadcast channels.

In the broadcast receiving method as shown in Figure 5, the controller 420 controls the display information generator 430 to generate a list, in which specific broadcast channels are distinguished from other broadcast channels among the tunable broadcast channels and shown, as display information to be displayed on one field of a display (S510). In addition, the controller 420 controls the broadcast receiver 410 so that specific broadcast channels may be automatically tuned among the tunable broadcast channels.

Therefore, it is possible to implement the broadcast receiving apparatus and broadcast receiving method in which specific broadcast channels may be distinguished from other broadcast channels and shown, and the specific broadcast channels may be automatically tuned.

As described above, according to the exemplary embodiments of the present invention, specific broadcast channels are distinguished from other broadcast channels and displayed on the broadcast channel list, and at the same time, the specific broadcast channels are automatically tuned. Therefore, the specific broadcast channels may be automatically searched from the broadcast channel list, and the user may confirm which programs are currently being broadcast on specific channels without selecting each of the specific broadcast channels separately using a remote controller.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. Broadcast receiving apparatus comprising:
a broadcast receiver (110) for tuning to a broadcast channel;
a display information generator (130) for generating display information to be displayed on a display (150); and
a controller (170) for controlling the broadcast receiver to automatically tune to specific broadcast channels from among a plurality of tunable broadcast channels,
**characterised in that**
the controller is arranged to control the display information generator to generate a list (320) of tunable broadcast channels,
wherein the list comprises the specific broadcast channels and other broadcast channels, and the specific broadcast channels are arranged to be displayed differently from the other broadcast channels, and
wherein during a broadcast channel scanning operation, the controller is arranged to determine whether a broadcast channel selection command is input during a first time period if it is determined that a currently scanned broadcast channel is one of the specific broadcast channels, and to determine whether a broadcast channel selection command is input during a second time period if it is determined that the currently scanned broadcast channel is not one of the specific broadcast channels, the second time period being shorter than the first time period.

2. The apparatus as claimed in claim 1, wherein the controller is arranged to scan the tunable broadcast channels sequentially in one of an increasing order and a decreasing order, and to control the broadcast receiver to tune to the currently scanned broadcast channel if it is determined that the currently scanned broadcast channel is one of the specific broadcast channels.

3. The apparatus as claimed in claim 2, wherein the controller is arranged to control the display information generator to generate an identification number (310) of the currently scanned broadcast channel as display information, and to control the broadcast receiver to tune to the currently scanned broadcast channel while displaying the identification number of the currently scanned broadcast channel if it is determined that the currently scanned broadcast channel is one of the specific broadcast channels.

4. The apparatus as claimed in claim 2 or 3, wherein the controller is arranged to control the display information generator to generate the identification number of the currently scanned broadcast channel for the first time period, if it is determined that the currently scanned broadcast channel is one of the specific broadcast channels; and to control the display information generator to generate the identification number of the currently scanned broadcast channel for the second time period, if it is determined that the currently scanned broadcast channel is not one of the specific broadcast channels.

5. The apparatus as claimed in claim 3 or 4, wherein the controller is arranged to control the display information generator so that the operations of displaying the identification number of the currently scanned broadcast channel are different according to whether the currently scanned broadcast channel is or is not one of the specific broadcast channels.

6. The apparatus as claimed in any one of claims 2 to 5, wherein the controller is arranged to control the broadcast receiver to not tune to the currently scanned broadcast channel, if it is determined that the currently scanned broadcast channel is not one of the specific broadcast channels.

7. The apparatus as claimed in any one of claims 2 to 6, wherein the controller is arranged to control the broadcast receiver to not tune to any broadcast channel, if it is determined that the currently scanned broadcast channel is not one of the specific broadcast channels.

8. The apparatus as claimed in any one of claims 2 to 6, wherein the controller is arranged to control the broadcast receiver to not display the broadcast channel tuned by the broadcast receiver, if it is determined that the currently scanned broadcast channel is not one of the specific broadcast channels.

9. The apparatus as claimed in any preceding claim, wherein the specific broadcast channels comprise one of broadcast channels selected by users, broadcast channels frequently viewed by users, digital broadcast channels, and major broadcast channels.

10. The apparatus as claimed in any preceding claim, further comprising a display (150) for displaying the list generated by the display information generator and broadcasting provided on the broadcast channel tuned by the broadcast receiver.

11. The apparatus as claimed in any preceding claim, further comprising a memory (190) for storing a listing of the tunable broadcast channels and a listing of the specific broadcast channels.

12. A broadcast receiving method comprising:
tuning to specific broadcast channels automatically from among a plurality of tunable broadcast channels,
**characterised in that** the method further comprises:
determining whether a broadcast channel selection command is input during a first time period if it is determined that a currently scanned broadcast channel during a broadcast channel scanning operation is one of the specific broadcast channels, and determining whether a broadcast channel selection command is input during a second time period if it is determined that the currently scanned broadcast channel is not one of the specific broadcast channels, the second time period being shorter than the first time period; and
generating a list (320) of tunable broadcast channels, to be displayed as display information on a display,
wherein the list comprises the specific broadcast channels and other broadcast channels, and the specific broadcast channels are arranged to be displayed differently from the other broadcast channels.

13. The method as claimed in claim 12, wherein the tuning comprises:
scanning the tunable broadcast channels sequentially in one of an increasing order and a decreasing order; and
tuning to the currently scanned broadcast channel, if it is determined that the currently scanned broadcast channel is one of the specific broadcast channels.

14. The method as claimed in claim 13, wherein the tuning the currently scanned broadcast channel comprises:
generating an identification number (310) of the currently scanned broadcast channel as display information; and
tuning to the currently scanned broadcast channel while displaying the identification number of the currently scanned broadcast channel, if it is determined that the currently scanned broadcast channel is one of the specific broadcast channels.

15. The method as claimed in claim 13 or 14, wherein the tuning the currently scanned broadcast channel comprises:
generating the identification number of the currently scanned broadcast channel for athe first time period, if it is determined that the currently scanned broadcast channel is one of the specific broadcast channels; and
generating the identification number of the currently scanned broadcast channel for athe second time period, which is shorter than the first time period, if it is determined that the currently scanned broadcast channel is not one of the specific broadcast channels.

16. The method as claimed in claim 14 or 15, wherein the operations of displaying the identification number of the currently scanned broadcast channel are different according to whether the currently scanned broadcast channel is or is not one of the specific broadcast channels.

17. The method as claimed in any one of claims 13 to 16, wherein the tuning comprises not tuning to the currently scanned broadcast channel, if it is determined that the currently scanned broadcast channel is not one of the specific broadcast channels.

18. The method as claimed in any one of claims 13 to 17, wherein the tuning comprises not tuning to any broadcast channel if it is determined that the currently scanned broadcast channel is not one of the specific broadcast channels.

19. The method as claimed in any one of claims 13 to 17, wherein the tuning comprises controlling broadcasting on a tuned broadcast channel to not be displayed, if it is determined that the currently scanned broadcast channel is not one of the specific broadcast channels

20. The method as claimed in any one of claims 12 to 19, wherein the specific broadcast channels comprise one of broadcast channels selected by users, broadcast channels frequently viewed by users, digital broadcast channels, and major broadcast channels.

21. The method as claimed in any one of claims 12 to 20, further comprising displaying the list and broadcasting provided on the tuned broadcast channel.

22. The method as claimed in any one of claims 12 to 21, wherein the generating a list comprises reading information stored in a memory (190) to find a listing of the tunable broadcast channels and a listing of the specific broadcast channels.

## Patentansprüche

1. Rundfunkempfangsvorrichtung, umfassend:
einen Rundfunkempfänger (110) zum Abstimmen auf einen Rundfunkkanal;
einen Anzeigeinformationengenerator (130) zum Generieren von Anzeigeinformationen, die auf einer Anzeige (150) anzuzeigen sind; und
eine Steuerung (170) zum Steuern des Rundfunkempfängers, um automatisch auf spezifische Rundfunkkanäle aus einer Vielzahl von abstimmbaren Rundfunkkanälen abzustimmen,
**dadurch gekennzeichnet, dass**
die Steuerung angeordnet ist, um den Anzeigeinformationengenerator zu steuern, um eine Liste (320) von abstimmbaren Rundfunkkanälen zu generieren,
wobei die Liste die spezifischen Rundfunkkanäle und andere Rundfunkkanäle umfasst und die spezifischen Rundfunkkanäle angeordnet sind, um verschieden von den anderen Rundfunkkanälen angezeigt zu werden, und
wobei, während einer Rundfunkkanal-Abtastoperation, die Steuerung angeordnet ist, um zu bestimmen, ob ein Rundfunkkanal-Auswahlbefehl während einer ersten Zeitperiode eingegeben wird, wenn bestimmt wird, dass ein gegenwärtig abgetasteter Rundfunkkanal einer der spezifischen Rundfunkkanäle ist, und um zu bestimmen, ob ein Rundfunkkanal-Auswahlbefehl während einer zweiten Zeitperiode eingegeben wird, wenn bestimmt wird, dass der gegenwärtig abgetastete Rundfunkkanal nicht einer der spezifischen Rundfunkkanäle ist, wobei die zweite Zeitperiode kürzer als die erste Zeitperiode ist.

2. Vorrichtung nach Anspruch 1, wobei die Steuerung angeordnet ist, um die abstimmbaren Rundfunkkanäle nacheinander in einer einer aufsteigenden Reihenfolge und einer absteigenden Reihenfolge abzutasten und um den Rundfunkempfänger zu steuern, um auf den gegenwärtig abgetasteten Rundfunkkanal abzustimmen, wenn bestimmt wird, dass der gegenwärtig abgetastete Rundfunkkanal einer der spezifischen Rundfunkkanäle ist.

3. Vorrichtung nach Anspruch 2, wobei die Steuerung angeordnet ist, um den Anzeigeinformationengenerator zu steuern, um eine Identifikationsnummer (310) des gegenwärtig abgetasteten Rundfunkkanals als Anzeigeinformationen zu generieren, und um den Rundfunkempfänger zu steuern, um auf den gegenwärtig abgetasteten Rundfunkkanal abzustimmen, während die Identifikationsnummer des gegenwärtig abgetasteten Rundfunkkanals angezeigt wird, wenn bestimmt wird, dass der gegenwärtig abgetastete Rundfunkkanal einer der spezifischen Rundfunkkanäle ist.

4. Vorrichtung nach Anspruch 2 oder 3, wobei die Steuerung angeordnet ist, um den Anzeigeinformationengenerator zu steuern, um die Identifikationsnummer des gegenwärtig abgetasteten Rundfunkkanals für die erste Zeitperiode zu generieren, wenn bestimmt wird, dass der gegenwärtig abgetastete Rundfunkkanal einer der spezifischen Rundfunkkanäle ist; und um den Anzeigeinformationengenerator zu steuern, um die Identifikationsnummer des gegenwärtig abgetasteten Rundfunkkanals für die zweite Zeitperiode zu generieren, wenn bestimmt wird, dass der gegenwärtig abgetastete Rundfunkkanal nicht einer der spezifischen Rundfunkkanäle ist.

5. Vorrichtung nach Anspruch 3 oder 4, wobei die Steuerung angeordnet ist, um den Anzeigeinformationengenerator zu steuern, so dass die Operationen zum Anzeigen der Identifikationsnummer des gegenwärtig abgetasteten Rundfunkkanals verschieden sind, je nachdem, ob der gegenwärtig abgetastete Rundfunkkanal einer der spezifischen Rundfunkkanäle ist oder nicht ist.

6. Vorrichtung nach einem der Ansprüche 2 bis 5, wobei die Steuerung angeordnet ist, um den Rundfunkempfänger zu steuern, um nicht auf den gegenwärtig abgetasteten Rundfunkkanal abzustimmen, wenn bestimmt wird, dass der gegenwärtig abgetastete Rundfunkkanal nicht einer der spezifischen Rundfunkkanäle ist.

7. Vorrichtung nach einem der Ansprüche 2 bis 6, wobei die Steuerung angeordnet ist, um den Rundfunkempfänger zu steuern, um nicht auf einen Rundfunkkanal abzustimmen, wenn bestimmt wird, dass der gegenwärtig abgetastete Rundfunkkanal nicht einer der spezifischen Rundfunkkanäle ist.

8. Vorrichtung nach einem der Ansprüche 2 bis 6, wobei die Steuerung angeordnet ist, um den Rundfunkempfänger zu steuern, um den Rundfunkkanal nicht anzuzeigen, der von dem Rundfunkempfänger abgestimmt wurde, wenn bestimmt wird, dass der gegenwärtig abgetastete Rundfunkkanal nicht einer der spezifischen Rundfunkkanäle ist.

9. Vorrichtung nach einem der vorstehenden Ansprüche, wobei die spezifischen Rundfunkkanäle eines von Rundfunkkanälen, die von Benutzern ausgewählt werden, Rundfunkkanälen, die häufig von Benutzern angesehen werden, digitalen Rundfunkkanälen und bedeutenden Rundfunkkanälen umfassen.

10. Vorrichtung nach einem der vorstehenden Ansprüche, weiter umfassend eine Anzeige (150) zum Anzeigen der Liste, die von dem Anzeigeinformationengenerator generiert wird, und von Rundfunkübertragung, die in dem Rundfunkkanal, der von dem Rundfunkempfänger abgestimmt ist, bereitgestellt wird.

11. Vorrichtung nach einem der vorstehenden Ansprüche, weiter umfassend einen Speicher (190) zum Speichern einer Auflistung der abstimmbaren Rundfunkkanäle und einer Auflistung der spezifischen Rundfunkkanäle.

12. Rundfunkempfangsverfahren, umfassend:
automatisches Abstimmen auf spezifische Rundfunkkanäle aus einer Vielzahl von abstimmbaren Rundfunkkanälen,
**dadurch gekennzeichnet, dass** das Verfahren weiter umfasst:
Bestimmen, ob ein Rundfunkkanal-Auswahlbefehl während einer ersten Zeitperiode eingegeben wird, wenn bestimmt wird, dass ein gegenwärtig abgetasteter Rundfunkkanal während einer Rundfunkkanal-Abtastoperation einer der spezifischen Rundfunkkanäle ist, und Bestimmen, ob ein Rundfunkkanal-Auswahlbefehl während einer zweiten Zeitperiode eingegeben wird, wenn bestimmt wird, dass der gegenwärtig abgetastete Rundfunkkanal nicht einer der spezifischen Rundfunkkanäle ist, wobei die zweite Zeitperiode kürzer als die erste Zeitperiode ist; und
Generieren einer Liste (320) von abstimmbaren Rundfunkkanälen, um als Anzeigeinformationen auf einer Anzeige angezeigt zu werden,
wobei die Liste die spezifischen Rundfunkkanäle und anderen Rundfunkkanäle umfasst und die spezifischen Rundfunkkanäle angeordnet sind, um verschieden von den anderen Rundfunkkanälen angezeigt zu werden.

13. Verfahren nach Anspruch 12, wobei das Abstimmen umfasst:
Abtasten der abstimmbaren Rundfunkkanäle nacheinander in einer einer aufsteigenden Reihenfolge und einer absteigenden Reihenfolge; und
Abstimmen auf den gegenwärtig abgetasteten Rundfunkkanal, wenn bestimmt wird, dass der gegenwärtig abgetastete Rundfunkkanal einer der spezifischen Rundfunkkanäle ist.

14. Verfahren nach Anspruch 13, wobei das Abstimmen des gegenwärtig abgetasteten Rundfunkkanals umfasst:
Generieren einer Identifikationsnummer (310) des gegenwärtig abgetasteten Rundfunkkanals als Anzeigeinformationen; und
Abstimmen auf den gegenwärtig abgetasteten Rundfunkkanal, während die Identifikationsnummer des gegenwärtig abgetasteten Rundfunkkanals angezeigt wird, wenn bestimmt wird, dass der gegenwärtig abgetastete Rundfunkkanal einer der spezifischen Rundfunkkanäle ist.

15. Verfahren nach Anspruch 13 oder 14, wobei das Abstimmen des gegenwärtig abgetasteten Rundfunkkanals umfasst:
Generieren der Identifikationsnummer des gegenwärtig abgetasteten Rundfunkkanals für die erste Zeitperiode, wenn bestimmt wird, dass der gegenwärtig abgetastete Rundfunkkanal einer der spezifischen Rundfunkkanäle ist; und
Generieren der Identifikationsnummer des gegenwärtig abgetasteten Rundfunkkanals für die zweite Zeitperiode, die kürzer als die erste Zeitperiode ist, wenn bestimmt wird, dass der gegenwärtig abgetastete Rundfunkkanal nicht einer der spezifischen Rundfunkkanäle ist.

16. Verfahren nach Anspruch 14 oder 15, wobei die Operationen zum Anzeigen der Identifikationsnummer des gegenwärtig abgetasteten Rundfunkkanals verschieden sind, je nachdem, ob der gegenwärtig abgetastete Rundfunkkanal einer der spezifischen Rundfunkkanäle ist oder nicht ist.

17. Verfahren nach einem der Ansprüche 13 bis 16, wobei das Abstimmen umfasst, nicht auf den gegenwärtig abgetasteten Rundfunkkanal abzustimmen, wenn bestimmt wird, dass der gegenwärtig abgetastete Rundfunkkanal nicht einer der spezifischen Rundfunkkanäle ist.

18. Verfahren nach einem der Ansprüche 13 bis 17, wobei das Abstimmen umfasst, nicht auf einen Rundfunkkanal abzustimmen, wenn bestimmt wird, dass der gegenwärtig abgetastete Rundfunkkanal nicht einer der spezifischen Rundfunkkanäle ist.

19. Verfahren nach einem der Ansprüche 13 bis 17, wobei das Abstimmen umfasst, zu steuern, dass Rundfunkübertragung in einem abgestimmten Rundfunkkanal nicht angezeigt wird, wenn bestimmt wird, dass der gegenwärtig abgetastete Rundfunkkanal nicht einer der spezifischen Rundfunkkanäle ist.

20. Verfahren nach einem der Ansprüche 12 bis 19, wobei die spezifischen Rundfunkkanäle eines von Rundfunkkanälen, die von Benutzern ausgewählt werden, Rundfunkkanälen, die häufig von Benutzern angesehen werden, digitalen Rundfunkkanälen und bedeutenden Rundfunkkanälen umfassen.

21. Verfahren nach einem der Ansprüche 12 bis 20, weiter umfassend, die Liste und Rundfunkübertragung, die in dem abgestimmten Rundfunkkanal bereitgestellt wird, anzuzeigen.

22. Verfahren nach einem der Ansprüche 12 bis 21, wobei das Generieren einer Liste umfasst, Informationen zu lesen, die in einem Speicher (190) gespeichert sind, und eine Auflistung der abstimmbaren Rundfunkkanäle und eine Auflistung der spezifischen Rundfunkkanäle zu finden.

## Revendications

1. Appareil de réception de diffusion comprenant :
un récepteur de diffusion (110) destiné à s'accorder sur un canal de diffusion ;
un générateur d'informations d'affichage (130) destiné à générer des informations d'affichage à afficher sur un affichage (150) ; et
une unité de commande (170) destinée à commander au récepteur de diffusion de s'accorder automatiquement sur des canaux de diffusion spécifiques parmi une pluralité de canaux de diffusion accordables,
**caractérisé en ce que**
l'unité de commande est agencée pour commander au générateur d'informations d'affichage de générer une liste (320) de canaux de diffusion accordables,
la liste comprenant les canaux de diffusion spécifiques et d'autres canaux de diffusion, et les canaux de diffusion spécifiques étant agencés pour être affichés différemment des autres canaux de diffusion, et
dans lequel durant une opération de balayage de canaux de diffusion, l'unité de commande est agencée pour déterminer si une commande de sélection de canal de diffusion est entrée ou non durant une première période de temps s'il est déterminé qu'un canal de diffusion en cours de balayage est l'un des canaux de diffusion spécifiques, et déterminer si une commande de sélection de canal de diffusion est entrée ou non durant une seconde période de temps s'il est déterminé que le canal de diffusion en cours de balayage n'est pas l'un des canaux de diffusion spécifiques, la seconde période de temps étant plus courte que la première période de temps.

2. Appareil selon la revendication 1, dans lequel l'unité de commande est agencée pour balayer les canaux de diffusion accordables séquentiellement dans l'un d'un ordre croissant et d'un ordre décroissant, et commander au récepteur de diffusion de s'accorder sur le canal de diffusion en cours de balayage s'il est déterminé que le canal de diffusion en cours de balayage est l'un des canaux de diffusion spécifiques.

3. Appareil selon la revendication 2, dans lequel l'unité de commande est agencée pour commander au générateur d'informations d'affichage de générer un numéro d'identification (310) du canal de diffusion en cours de balayage comme informations d'affichage, et commander au récepteur de diffusion de s'accorder sur le canal de diffusion en cours de balayage tout en affichant le numéro d'identification du canal de diffusion en cours de balayage s'il est déterminé que le canal de diffusion en cours de balayage est l'un des canaux de diffusion spécifiques.

4. Appareil selon la revendication 2 ou 3, dans lequel l'unité de commande est agencée pour commander au générateur d'informations d'affichage de générer le numéro d'identification du canal de diffusion en cours de balayage pendant la première période de temps, s'il est déterminé que le canal de diffusion en cours de balayage est l'un des canaux de diffusion spécifiques ;
et commander au générateur d'informations d'affichage de générer le numéro d'identification du canal de diffusion en cours de balayage pendant la seconde période de temps, s'il est déterminé que le canal de diffusion en cours de balayage n'est pas l'un des canaux de diffusion spécifiques.

5. Appareil selon la revendication 3 ou 4, dans lequel l'unité de commande est agencée pour commander le générateur d'informations d'affichage de telle sorte que les opérations d'affichage du numéro d'identification du canal de diffusion en cours de balayage soient différentes selon que le canal de diffusion en cours de balayage est ou non l'un des canaux de diffusion spécifiques.

6. Appareil selon l'une quelconque des revendications 2 à 5, dans lequel l'unité de commande est agencée pour commander au récepteur de diffusion de ne pas s'accorder sur le canal de diffusion en cours de balayage s'il est déterminé que le canal de diffusion en cours de balayage n'est pas l'un des canaux de diffusion spécifiques.

7. Appareil selon l'une quelconque des revendications 2 à 6, dans lequel l'unité de commande est agencée pour commander au récepteur de diffusion de ne s'accorder sur aucun canal de diffusion s'il est déterminé que le canal de diffusion en cours de balayage n'est pas l'un des canaux de diffusion spécifiques.

8. Appareil selon l'une quelconque des revendications 2 à 6, dans lequel l'unité de commande est agencée pour commander au récepteur de diffusion de ne pas afficher le canal de diffusion sur lequel le récepteur de diffusion est accordé s'il est déterminé que le canal de diffusion en cours de balayage n'est pas l'un des canaux de diffusion spécifiques.

9. Appareil selon l'une quelconque des revendications précédentes, dans lequel les canaux de diffusion spécifiques comprennent l'un de canaux de diffusion sélectionnés par les utilisateurs, de canaux de diffusion fréquemment visualisés par les utilisateurs, de canaux de diffusion numériques, et de canaux de diffusion principaux.

10. Appareil selon l'une quelconque des revendications précédentes, comprenant en outre un affichage (150) pour afficher la liste générée par le générateur d'informations d'affichage et une diffusion assurée sur le canal de diffusion sur lequel le récepteur de diffusion est accordé.

11. Appareil selon l'une quelconque des revendications précédentes, comprenant en outre une mémoire (190) pour mémoriser une liste des canaux de diffusion accordables et une liste des canaux de diffusion spécifiques.

12. Procédé de réception de diffusion comprenant :
l'accord automatique sur des canaux de diffusion spécifiques parmi une pluralité de canaux de diffusion accordables,
**caractérisé en ce que** le procédé comprend en outre
la détermination si une commande de sélection de canal de diffusion est entrée ou non durant une première période de temps s'il est déterminé qu'un canal de diffusion en cours de balayage durant une opération de balayage de canaux de diffusion est l'un des canaux de diffusion spécifiques, et déterminer si une commande de sélection de canal de diffusion est entrée ou non durant une seconde période de temps s'il est déterminé que le canal de diffusion en cours de balayage n'est pas l'un des canaux de diffusion spécifiques, la seconde période de temps étant plus courte que la première période de temps ; et
la génération d'une liste (320) de canaux de diffusion accordables, à afficher comme informations d'affichage sur un affichage,
la liste comprenant les canaux de diffusion spécifiques et d'autres canaux de diffusion, et les canaux de diffusion spécifiques étant agencés pour être affichés différemment des autres canaux de diffusion.

13. Procédé selon la revendication 12, dans lequel l'accord comprend :
le balayage séquentiel des canaux de diffusion accordables dans l'un d'un ordre croissant et d'un ordre décroissant ; et
l'accord sur le canal de diffusion en cours de balayage s'il est déterminé que le canal de diffusion en cours de balayage est l'un des canaux de diffusion spécifiques.

14. Procédé selon la revendication 13, dans lequel l'accord du canal de diffusion en cours de balayage comprend :
la génération d'un numéro d'identification (310) du canal de diffusion en cours de balayage comme informations d'affichage ; et
l'accord sur le canal de diffusion en cours de balayage tout en affichant le numéro d'identification du canal de diffusion en cours de balayage s'il est déterminé que le canal de diffusion en cours de balayage est l'un des canaux de diffusion spécifiques.

15. Procédé selon la revendication 13 ou 14, dans lequel l'accord du canal de diffusion en cours de balayage comprend :
la génération du numéro d'identification du canal de diffusion en cours de balayage pendant la première période de temps, s'il est déterminé que le canal de diffusion en cours de balayage est l'un des canaux de diffusion spécifiques ; et
la génération du numéro d'identification du canal de diffusion en cours de balayage pendant la seconde période de temps, qui est plus courte que la première période de temps, s'il est déterminé que le canal de diffusion en cours de balayage n'est pas l'un des canaux de diffusion spécifiques.

16. Procédé selon la revendication 14 ou 15, dans lequel les opérations d'affichage du numéro d'identification du canal de diffusion en cours de balayage sont différentes selon que le canal de diffusion en cours de balayage est ou non l'un des canaux de diffusion spécifiques.

17. Procédé selon l'une quelconque des revendications 13 à 16, dans lequel l'accord comprend le non-accord sur le canal de diffusion en cours de balayage s'il est déterminé que le canal de diffusion en cours de balayage n'est pas l'un des canaux de diffusion spécifiques.

18. Procédé selon l'une quelconque des revendications 13 à 17, dans lequel l'accord comprend l'accord sur aucun canal de diffusion s'il est déterminé que le canal de diffusion en cours de balayage n'est pas l'un des canaux de diffusion spécifiques.

19. Procédé selon l'une quelconque des revendications 13 à 17, dans lequel l'accord comprend la commande du non-affichage de la diffusion sur un canal de diffusion accordé s'il est déterminé que le canal de diffusion en cours de balayage n'est pas l'un des canaux de diffusion spécifiques.

20. Procédé selon l'une quelconque des revendications 12 à 19, dans lequel les canaux de diffusion spécifiques comprennent l'un de canaux de diffusion sélectionnés par les utilisateurs, de canaux de diffusion fréquemment visualisés par les utilisateurs, de canaux de diffusion numériques, et de canaux de diffusion principaux.

21. Procédé selon l'une quelconque des revendications 12 à 20, comprenant en outre l'affichage de la liste et de la diffusion assurée sur le canal de diffusion accordé.

22. Procédé selon l'une quelconque des revendications 12 à 21, dans lequel la génération d'une liste comprend la lecture d'informations mémorisées dans une mémoire (190) afin de trouver une liste des canaux de diffusion accordables et une liste des canaux de diffusion spécifiques.
